# EUROPÄISCHE PATENTSCHRIFT

(11) **EP 2 870 333 B1**
(45) Veröffentlichungstag und Bekanntmachung des Hinweises auf die Patenterteilung: **03.05.2017**
(21) Anmeldenummer: 13732422.4
(22) Anmeldetag: 20.06.2013
(51) Int. Cl.: F01N 3/20, F01N 11/00

(54) **VERFAHREN ZUR BESTIMMUNG VON REDUKTIONSMITTELSCHLUPF**
METHOD FOR DETERMINING THE SLIP OF REDUCING AGENT
PROCÉDÉ POUR DÉTERMINER LES REJETS D'UN AGENT DE RÉDUCTION

(30) Priorität: 04.07.2012 DE 102012105953
(43) Veröffentlichungstag der Anmeldung: 13.05.2015
(73) Patentinhaber: Continental Automotive GmbH, 30165 Hannover (DE)
(72) Erfinder: BAUER, Peter, 53721 Siegburg (DE)
(86) Internationale Anmeldenummer: PCT/EP2013/062877
(87) Internationale Veröffentlichungsnummer: WO 2014/005850

(56) Entgegenhaltungen:
- EP-A1- 2 317 091
- EP-A1- 2 357 334

## Beschreibung

Die Erfindung betrifft ein Verfahren zur Bestimmung von Reduktionsmittelschlupf aus einer Abgasbehandlungsvorrichtung, insbesondere für mobile Verbrennungskraftmaschinen.

Zur Vermeidung der Freisetzung von Stickstoffoxidverbindungen durch die Verbrennung in modernen Verbrennungskraftmaschinen, insbesondere Diesel-Aggregaten, hat sich das sogenannte SCR-Verfahren (selektive katalytische Reduktion) durchgesetzt. Hierzu wird ein SCR-Katalysator verwendet, der eine Beschichtung aufweist, welche die Reaktion bei relativ niedrigen Temperaturen ermöglicht. Bei der selektiven katalytischen Reduktion werden die Stickstoffoxidverbindungen mit Ammoniak in Reaktion gebracht, so dass Stickstoff und Wasser gebildet werden. Um eine möglichst hohe Umsetzungsrate zu erreichen, ist es wünschenswert, möglichst viel Ammoniak für die Reaktion zur Verfügung zu stellen. Es ist jedoch zugleich erforderlich, dass möglichst wenig Ammoniak den SCR-Katalysator bzw. die Abgasbehandlungsvorrichtung verlässt, weil. Ammoniak bereits in geringen Mengen als geruchsbelästigend wahrgenommen wird. Die stöchiometrische Zugabe von Ammoniak stellt daher die optimale Zugabemenge dar. Zur Annäherung an dieses Optimum sind bereits eine Vielzahl von Verfahren bekannt, die jedoch entweder langsam in der Anpassung sind oder eine geringe Effizienz in Hinsicht auf das umgesetzte Volumen oder aufgewendete Ammoniak aufweisen.

Aus EP 2 317 091 A1 ist ein Abgasreinigungssystem bekannt, welches eine NOx-Reinigungsrate kontinuierlich aufrechterhalten kann, während ein Ammoniakschlupf unterdrückt werden soll.

Aus EP 2 357 334 A1 ist ein Abgasreinigungssystem bekannt, wobei hier die Genauigkeit einer Reduktionsmittelzufuhr unter Berücksichtigung eines Reduktionsmittelschlupfs verbessert werden soll.

Hiervon ausgehend liegt der vorliegenden Erfindung die Aufgabe zugrunde, die aus dem Stand der Technik bekannten Nachteile und/oder Probleme zumindest teilweise zu überwinden. Die Aufgabe wird gelöst durch die Merkmale der unabhängigen Patentansprüche. Vorteilhafte Weiterbildungen sind Gegenstand der abhängigen Patentansprüche.

Die Erfindung betrifft ein Verfahren zur Bestimmung von Reduktionsmittelschlupf aus einer Abgasbehandlungsvorrichtung, die zumindest die folgenden Komponenten aufweist:
- einen SCR-Katalysator;
- eine in Abgasströmungsrichtung vor dem SCR-Katalysator angeordnete Zugabestelle für Reduktionsmittel;
- eine Einrichtung zur Ermittlung einer Stickstoffoxidverbindungsmenge in Abgasströmungsrichtung vor dem SCR-Katalysator; und
- einen zweiten Stickstoffoxidsensor in Abgasströmungsrichtung hinter dem SCR-Katalysator.

Für die Einrichtung und den zweiten Stickstoffoxidsensor sind Reduktionsmittel und Stickstoffoxidverbindungen nicht unterscheidbar. Eine Zugabemenge von Reduktionsmittel zu der Abgasbehandlungsvorrichtung wird mit einem Regelglied geregelt, das einen integrierenden Regelanteil hat. Das Verfahren weist dabei zumindest die folgenden Schritte auf:
a) Bestimmen einer Differenz der Sensorsignale des zweiten Stickstoffoxidsensors und der Einrichtung;
b) Bestimmen einer Regelabweichung aus der Differenz und einem Zielwert des Reglers;
d) Bestimmen eines Gradienten des integrierenden Regelanteils;
e) Feststellen von Reduktionsmittelschlupf, wenn die Regelabweichung einen ersten Schwellwert und der Gradient einen zweiten Schwellwert überschreitet.

Der zu vermeidende Reduktionsmittelschlupf entsteht insbesondere bei einer überstöchiometrischen Zugabe von Ammoniak bzw. von einem Reduktionsmittel oder Reduktionsmittelvorläufer, insbesondere eine Harnstoff-Wasser-Lösung, wie z. B. AdBlue® mit einem Harnstoffgehalt von 32,5 %. Die Hamstoff-Wasser-Lösung wird dabei thermisch im Abgas (Thermolyse) und/oder hydrolytisch in einem Hydrolysekatalysator in Ammoniak und Wasser umgesetzt. Diese überstöchiometrische Zugabe kann zum einen durch eine Abweichung der benötigten Menge von der zugegebenen Menge entstehen und/oder durch Temperaturveränderungen an einem für Ammoniak speicherfähigen SCR-Katalysator, weil sich die Speicherfähigkeit über die Temperatur verändert. Der Reduktionsmittelschlupf kann auch allein durch eine Temperaturveränderung des Speicherkatalysators auftreten.

Der SCR-Katalysator ist insbesondere ein (beispielsweise keramischer) Wabenkörper, welcher für das Abgas durchströmbar ist und eine möglichst große Oberfläche aufweist. An der Oberfläche des SCR-Katalysators, die in Kontakt mit dem Abgasstrom tritt, ist eine Beschichtung vorgesehen, die die Reaktionstemperatur der Redoxreaktion zwischen Ammoniak und Stickstoffoxidverbindungen absenkt. Weiterhin kann an dem SCR-Katalysator eine Beschichtung vorgesehen sein, die unverbrauchtes Ammoniak einlagern kann, und somit den SCR-Katalysator speicherfähig macht. Eine solche Beschichtung kann auch in einem baulich getrennten Speicherkatalysator vorgesehen sein. In dieser Anmeldung werden der SCR-Katalysator und der Speicherkatalysator auch bei baulicher Trennung gemeinsam als SCR-Katalysator bezeichnet. Es sei an dieser Stelle darauf hingewiesen, dass das Verfahren sowohl bei der Verwendung eines speicherfähigen als auch ohne einen speicherfähigen Katalysator funktioniert.

In Abgasströmungsrichtung vor dem SCR-Katalysator ist eine Zugabestelle (Ventil, Injektor oder dergleichen) für ein Reduktionsmittel vorgesehen, so dass das Ammoniakgas für die SCR-Reaktion im SCR-Katalysator zur Verfügung steht. Häufig wird ein Reduktionsmittelvorläufer in das Abgas eingedüst, erst im Abgas vollständig verdampft und so erst dort in Ammoniak umgesetzt.

Weiterhin weist die Abgasbehandlungsvorrichtung einen zweiten Stickstoffoxidsensor in Abgasströmungsrichtung hinter dem SCR-Katalysator auf. Mit dem Begriff Abgasströmungsrichtung ist bei der pulsierenden Strömung des Abgases die Richtung gemeint, die in der Abgasbehandlungsvorrichtung von der Verbrennungskraftmaschine zum Abgasleitungsauslass in die Umgebung weist.

Weiterhin umfasst die Abgasbehandlungsvorrichtung eine Einrichtung zur Ermittlung einer Stickstoffoxidverbindungsmenge in Abgasströmungsrichtung vor dem SCR-Katalysator. Dies kann z. B. ein erster Stickstoffoxidsensor sein, der im Wesentlichen bauidentisch mit dem zweiten Stickstoffoxidsensor ist und sich nur durch seine Position relativ zum SCR-Katalysator von diesem unterscheidet. Die Einrichtung zur Ermittlung kann aber auch ein Abgasmodell sein, welches basierend auf empirischen Versuchsdaten berechnet wird oder auf Basis von "Look up"-Tabellen jeweils korrespondierende gespeicherte Ausgangswerte für gespeicherte Eingangswerte bereitstellt.

Zur Erläuterung sei darauf hingewiesen, dass die Einrichtung zur Ermittlung der Stickstoffoxidverbindungsmenge einen ersten Stickstoffoxidsensor in Abgasströmungsrichtung vor dem SCR-Katalysator umfassen kann. Da das Abgas in Strömungsrichtung dann zunächst den ersten Stickstoffoxidsensor (vor dem SCR-Katalysator) und dann einen zweiten Stickstoffoxidsensor (nach dem SCR-Katalysator) erreicht, wurden die Bezeichnung "erster" und "zweiter" Stickstoffoxidsensor gewählt. Hat die Einrichtung zur Ermittlung der Stickstoffoxidverbindungsmenge keinen Stickstoffoxidsensor, so kann die Abgasbehandlungsvorrichtung auch nur einen einzigen (hier weiterhin als "zweiten" bezeichneten) Stickstoffoxidsensor aufweisen.

Zumindest für den zweiten Stickstoffoxidsensor, und auch bei Einsatz des ersten Stickstoffoxidsensors, ist Reduktionsmittel nicht von Stickstoffoxidverbindungen unterscheidbar. Das heißt, ein Stickstoffoxidsensor gibt das gleiche Messsignal aus, wenn er Reduktionsmittel (also insbesondere Ammoniak-Gas) detektiert, wie auch bei der Detektion von Stickstoffoxidverbindungen. Ist der erste Stickstoffoxidsensor vor der Zugabestelle für Reduktionsmittel angeordnet, so sind die Messergebnisse vom Grundsatz her identisch mit einer modellbasierten Berechnung einer Stickstoffoxidverbindungsmenge vor dem SCR-Katalysator, weil hier noch kein Reduktionsmittel vorliegt.

Die Zugabemenge von Reduktionsmittel wird über ein Regelglied geregelt, das vom Grundsatz her eine Umsetzungsrate mit der zukünftig zuzugebenden Zugabemenge von Reduktionsmittel abgleicht. In diesem Regelglied ist ein integrierender Regelanteil vorgesehen, welcher die Funktion eines Gedächtnisses erfüllt: Durch das Aufintegrieren der Reglereingangsgrößen wird die Reglerausgangsgröße um die durchschnittlichen Eingangsgrößen korrigiert und somit tritt eine über die Dauer in einem Regelbetrieb dämpfende Reglerwirkung ein, die keine allzu großen Abweichungen gegenüber dem Mittel der Eingangsgrößen erlaubt. Wird bei dem Regelglied auf einen differenzierenden Anteil verzichtet, so erhält man einen schnellen und präzisen Regler, der insbesondere schnell die gewünschte Ausgangsgröße erreicht und über die Dauer des Betriebs einen stabilen Verlauf aufweist.

Damit die Fähigkeiten des Regelglieds vollständig ausgenutzt werden können, werden die folgenden Verfahrensschritte vorgeschlagen: Zunächst wird mittels eines ersten Differenzoperators eine Differenz der Sensorsignale bzw. des Ausgangswerts des Modells der Stickstoffoxidverbindungsmenge vor dem SCR-Katalysator und der Stickstoffoxidverbindungsmenge hinter dem SCR-Katalysator berechnet. Anschließend wird die Regelabweichung aus der Differenz eines (abgespeicherten und/oder berechneten) Zielwerts des Reglers (zur Erreichung des stöchiometrischen Optimums) durch einen weiteren Differenzoperator berechnet. Der Zielwert des Reglers kann dabei auch unterhalb des stöchiometrischen Optimums oder oberhalb des stöchiometrischen Optimums angeordnet sein, wobei darauf abzustellen ist, ob ein Speicherkatalysator vorgesehen ist, inwieweit dieser ins Modell eingebunden ist und/oder wieviel Umsatz durch den häufig verwendeten Sperrkatalysator (ein dem SCR-Katalysator nachgeordneter Oxidationskatalysator) erreicht werden kann.

In einem weiteren Schritt, der parallel zu den Schritten a) und b) ausgeführt werden kann, wird der Gradient des integrierenden Regelanteils bestimmt. Der Gradient gibt die Geschwindigkeit der zeitlichen Änderung des integrierenden Regelanteils wieder. Ist der Betrag des Gradienten groß, so muss von einer großen Änderungen des integrierenden Regelanteils ausgegangen werden. Ist der Gradient hingegen klein, so arbeitet der Regler in einem stabilen Bereich bzw. in einem Bereich nahe des vorgegebenen Zielwerts. Der vorgegebene Zielwert ergibt sich beispielsweise aus den entsprechenden gesetzlichen Anforderungen. Diese Anforderungen richten sich nach dem Anwendungsgebiet und den Rohemissionen (Emissionen ohne wesentliche Abgasbehandlung) des Motors. Durch die gesetzlichen Anforderungen kann der vorgegebene Zielwert auch prozentual festgelegt sein. Beispielsweise kann der Zielwert eine Reduktion der Stickstoffoxide im Abgas gegenüber den Rohemissionen um 80 Prozent sein. Beispielsweise kann ein Rückgang auf 65 Prozent (und eine Erhöhung der eingespritzten Menge an flüssigem Additiv auf das 1,3- bis 1,4-fache) für einen Zeitraum von 5 bis 180 Sekunden im Rahmen der Durchführung des beschriebenen Verfahrens (je nach Abgasmassenstrom und Menge an eingespritztem flüssigem Additiv) zulässig sein.

Wird nun ein erster Schwellwert durch die ermittelte Regelabweichung überschritten (und/oder erreichet) und wird auch ein zweiter Schwellwert vom Gradienten des integrierenden Regelanteils überschritten, so wird daraus geschlossen, dass ein Reduktionsmittelschlupf (Durchtritt von Ammoniak-Gas durch den SCR-Katalysator hindurch) vorliegt. Die Dosiermenge wird dementsprechend durch den Regler reduziert. Diese Annahme basiert auf den folgenden Zusammenhängen: Zumindest der zweite Stickstoffoxidsensor unterscheidet nicht zwischen Reduktionsmittel, welches durch überstöchiometrisches Vorhandensein aus dem SCR-Katalysator entweicht, und Stickstoffoxidverbindungen. Wird davon ausgegangen, dass das Reduktionsmittel unterstöchiometrisch zugegeben wurde und jeweils vollständig umgesetzt wird, also kein Schlupf auftritt, so erfasst der zweite Stickstoffoxidsensor ausschließlich Stickstoffoxidverbindungen; und zwar um den Betrag des Abstands zur stöchiometrischen Zugabemenge. In einem solchen Fall soll und wird das Regelglied die Zugabemenge bis zu einem Zielwert des Reglers, z. B. das stöchiometrische Optimum, anheben.

Wird aber mehr Reduktionsmittel zugegeben als umgesetzt werden kann, so erfasst der zweite Stickstoffoxidsensor einen Teil Reduktionsmittel und ggf. einen Teil Stickstoffoxidverbindungen. Ohne die Beachtung der Schwellwerte würde die Zugabemenge von Reduktionsmittel weiter angehoben, weil das Eingangssignal einen Überschuss an Stickstoffoxidverbindungen suggeriert. Weil nun aber bei Auftreten von Schlupf die Menge an Reduktionsmittel die Messabweichung durch den zweiten Stickstoffoxidsensor nach einer langsamen Annäherung an den Zielwert plötzlich signifikant ansteigen lässt, wird über eine Kombination der Schwellwerte die Fehlinterpretation des Reglers erfasst und die Zugabemenge von Reduktionsmittel kann durch das Regelglied entsprechend reduziert werden. Die Geschwindigkeit eines solchen Reglers, der auf dem vorgeschlagenen Verfahren basiert, ist sehr hoch und der Algorithmus überraschend einfach. Hierdurch wird ein zuverlässiges Verfahren erreicht, bei dem auftretender Reduktionsmittelschlupf sicher erfasst wird und somit sicher verhinderbar ist.

In einer vorteilhaften Ausführungsform des Verfahrens ist in Abgasströmungsrichtung vor dem zweiten Stickstoffoxidsensor und hinter der Zugabestelle ein Speicherkatalysator zur Speicherung von Reduktionsmittel angeordnet. Ganz besonders bevorzugt ist hierbei, dass der SCR-Katalysator als Speicherkatalysator ausgeführt ist, also selbst Reduktionsmittel (zeitweise) einlagert. Dies kann mittels eines porösen Grundwerkstoffs (z. B. Keramik) und/oder einer besonders angepassten Beschichtung (Porosität, Menge, Schichtdicke, etc.) erreicht werden.

Ein Speicherkatalysator ist dazu in der Lage, Ammoniak, welches überstöchiometrisch beigegeben wurde, einzulagern und bei Bedarf (später bzw. bei anderen Umgebungsbedingungen) wieder abzugeben. Speicherkatalysatoren weisen oft eine starke Temperaturabhängigkeit der Speicherfähigkeit auf. Ist der Speicherkatalysator kalt, so kann er nur eine geringe Menge an Ammoniak einlagern. Ist der Speicherkatalysator zu heiß, reduziert sich die Speicherfähigkeit ebenfalls. Arbeitet der Speicherkatalysator in einem stabilen Temperaturbereich, so kann damit ausreichend sichergestellt werden, dass eine stöchiometrische Menge an Ammoniak zur SCR-Reaktion zur Verfügung steht. Insbesondere bei mobilen Verbrennungskraftmaschinen schwanken die Temperaturen jedoch sehr stark. Dadurch wird die Nutzung des Speicherkatalysators beeinträchtigt. Eine Möglichkeit zur Behandlung dieser labilen Eigenschaft des Speicherkatalysators ist es, den Speicherkatalysator nur so weit aufzufüllen, dass er bei den meisten Temperaturbereichen nicht an sein Speichermaximum gelangt und somit auch kein temperaturbedingter Schlupf auftritt. Eine solche Regelung ist jedoch ineffizient, weil sie die Pufferfähigkeiten des Speicherkatalysators nicht annähernd vollständig ausschöpft.

Mit dem oben beschriebenen Verfahren kann sehr schnell auf solche Temperaturänderungen und/oder fehlerhafte Dosierungen reagiert werden, so dass die Puffereigenschaften eines Speicherkatalysators mit einem deutlich höheren Wirkungsgrad ausgenutzt werden können. Die Erfassung der Temperatur des Speicherkatalysators ist für die meisten Fälle aufgrund der vorhandenen Bauteile mit Wärmekapazität nicht ausreichend schnell, wofür das vorgeschlagene Verfahren Abhilfe leistet und zudem eine direkte Messung des Reduktionsmittelschlupfs bietet, so dass auch Fehlfunktionen und Alterung des Speicherkatalysators adäquat geregelt werden.

In einer weiteren vorteilhaften Ausführungsform des Verfahrens wird das Verfahren aktiviert, wenn die an die Abgasbehandlungsvorrichtung angeschlossene Verbrennungskraftmaschine in einem konstanten Betriebszustand ist.

Insbesondere bei einer Abgasbehandlungsvorrichtung ohne Speicherkatalysator bzw. mit einem SCR-Katalysator mit nur geringer Speicherwirkung ist es sinnvoll, das Verfahren nur in einem konstanten Betriebszustand (erkennbare bzw. prognostizierbare Betriebsphase mit sich nur gering ändernden Umgebungsbedingungen in der Abgasbehandlungsvorrichtung) der Verbrennungskraftmaschine zu aktivieren.

Die Unterscheidung ob ein "konstanter" Betriebszustand vorliegt oder nicht, kann anhand von Grenzwerten für bestimmte Betriebsparameter des Kraftfahrzeuges getroffen werden. Beispielsweise können ein Gradient der Motordrehzahl und/oder ein Gradient der Motorlast für die Unterscheidung genutzt werden. Ein Gradient berücksichtigt die zeitliche Veränderung des Betriebsparameters. Wenn dieser Gradient bzw. diese Gradienten einen vorgegebenen Grenzwert unterschreiten, liegt ein "konstanter" Betriebszustand vor. Als Parameter zur Erkennung des "konstanten" Betriebszustandes kann auch ein Gradient des Stickstoffoxidmassenstroms verwendet werden. Nur wenn dieser Gradient unterhalb eines festgelegten Schwellwertes ist, liegt ein "konstanter" Betriebszustand vor.

Für die übrigen Zustände, in denen Laständerung an der Verbrennungskraftmaschine und somit Veränderungen der Temperaturen und Abgaszusammensetzungen auftreten, werden dann konventionelle Verfahren eingesetzt. Gerade in einem konstanten Betriebszustand wird mit dem vorgeschlagenen Verfahren schnell der optimale stöchiometrische Zustand der Zugabemenge erreicht. Das Auftreten von Reduktionsmittelschlupf infolge einer überstöchiometrischen Zugabe von Reduktionsmittel wird bereits bei kleinen Mengen gut erfasst. Dadurch wird erreicht, dass eine Obergrenze des Reduktionsmittelschlupfs nicht übermäßig überschritten wird.

Insbesondere ist das vorgeschlagene Verfahren dafür geeignet, eine Herabsetzung der Umsetzungsmenge in dem SCR-Katalysator infolge von Alterung, Vergiftung oder sonstigen zwischenzeitlichen Veränderungen am SCR-Katalysator auszugleichen.

In einer weiteren vorteilhaften Ausführungsform des Verfahrens wird der integrierende Regelanteil für ein erstes Zeitintervall auf einen Maximalwert begrenzt, wenn in Schritt e) ein Reduktionsmittelschlupf festgestellt wird.

Durch das Festsetzen des integrierenden Regelanteils auf einen Maximalwert wird die "Gedächtnisfunktion" des integrierenden Regelanteils in einen Sollwertgeber mit Proportionalregelglied umgewandelt. Der Maximalwert kann dabei basierend auf empirischen Daten auf einen festen Wert gesetzt werden, bei dem unter üblichen Bedingungen Reduktionsmittelschlupf unterbunden wird. Ebenso kann der Maximalwert, abhängig von den Eingangsgrößen, nämlich z. B. dem Grad der Abweichung vom ersten Schwellwert und/oder vom zweiten Schwellwert, beispielsweise basierend auf einer "Look up"-Tabelle, angepasst werden. In der Regel wird der integrierende Regelanteil auf einen Maximalwert heruntergeführt, der unterhalb des aufintegrierten Regelanteils liegt. Damit wird nachfolgend Schritt e) insbesondere ein Maximalwert entweder (neu) eingeführt und/oder ein bereits existierender Grenzwert auf einen vorgebbaren Maximalwert reduziert. Bei der Festlegung des Maximalwertes für den integrierenden Regelanteil sollten die Erholungszeit, die der Regler nach einer Durchführung des beschriebenen Verfahrens benötigt, und die zulässige maximale Zeit, in der keine ordnungsgemäße Reduzierung der Stickstoffoxidemission erfolgt, berücksichtigt werden. Diese Zeiten sind abhängig von der jeweiligen Abgasrichtlinie. Während der Erholungszeit findet typischerweise keine ordnungsgemäße Reduzierung statt. Je niedriger der Maximalwert ist, umso leichter wird das beschriebene Verfahren ausgelöst.

Die Erfindung ist insbesondere bei einem Kraftfahrzeug einsetzbar, welches eine Verbrennungskraftmaschine und eine Abgasbehandlungsvorrichtung zur Reinigung der Abgase der Verbrennungskraftmaschine aufweist. Die Abgasbehandlungsvorrichtung weist zumindest die folgenden Komponenten auf:
- einen SCR-Katalysator;
- eine in Abgasströmungsrichtung vor dem SCR-Katalysator angeordnete Zugabestelle für Reduktionsmittel;
- eine Einrichtung zur Ermittlung einer Stickstoffoxidverbindungsmenge in Abgasströmungsrichtung vor dem SCR-Katalysator; und
- einen zweiten Stickstoffoxidsensor in Abgasströmungsrichtung hinter dem SCR-Katalysator,
sowie eine Kontrolleinheit, welche zur Durchführung eines Verfahrens gemäß der obigen Beschreibung eingerichtet ist.

Die Abgasbehandlungsvorrichtung ist zur Beseitigung von Schadstoffen aus dem Abgas eingerichtet, so dass am Auslass einer Abgasleitung zur Umgebung zu einem sehr hohen Prozentsatz ausschließlich Kohlendioxid, Stickstoff und Wasser abgegeben werden. Insbesondere werden in der Abgasbehandlungsvorrichtung die Abbrandprodukte eines Diesel-Kraftstoffs bevorzugt bei niedrigen Temperaturen in unschädliche Abgase umgewandelt. Zur Reduktion der Stickstoffoxidverbindungen im Abgas wird ein SCR-Katalysator verwendet, welcher Speichereigenschaften aufweist oder allein für das Auslösen der Reaktion, z. B. durch Absenken der Reaktionstemperatur, eingerichtet ist.

In Abgasströmungsrichtung vor dem SCR-Katalysator ist eine Zugabestelle für Reduktionsmittel angeordnet, z. B. ein Injektor, wie er für die Kraftstoffeinspritzung in die Brennkammer einer Verbrennungskraftmaschine bekannt ist. Hierüber wird ein Reduktionsmittel oder ein Reduktionsmittelvorläufer beigegeben, wobei der Reduktionsmittelvorläufer z. B. mit Hilfe der Abgastemperatur und chemischen Zusammensetzung des Abgases in Ammoniak umgesetzt wird.

Weiterhin ist eine Einrichtung zur Ermittlung einer Stickstoffoxidverbindungsmenge in Abgasströmungsrichtung vor dem SCR-Katalysator vorgesehen. Diese kann sowohl ein erster Stickstoffoxidsensor als auch ein Stickstoffoxidmodell sein, z. B. basierend auf dem häufig vorgeschalteten Oxidationskatalysator. Weiterhin ist ein zweiter Stickstoffoxidsensor in Abgasströmungsrichtung hinter dem SCR-Katalysator vorgesehen, welcher die Stickstoffoxidmenge im Abgas nach der abgelaufenen SCR-Reaktion ermitteln kann. Die Zugabe von Reduktionsmittel wird über eine Kontrolleinheit gesteuert, welche das hier beschriebene Verfahren durchführen kann. Diese Kontrolleinheit kann dabei so konzipiert und/oder eingerichtet sein, dass neben diesem Verfahren alternativ oder parallel ein konventionelles Verfahren durchführbar ist.

Die in den Patentansprüchen einzeln aufgeführten Merkmale sind in beliebiger, technologisch sinnvoller, Weise miteinander kombinierbar.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: ein Schaltschema einer Ausführungsvariante des Verfahrens zur Bestimmung von Reduktionsmittelschlupf aus einer Abgasbehandlungsvorrichtung;
- Fig. 2:: ein Diagramm der Regelung; und
- Fig. 3:: ein Kraftfahrzeug mit Abgasbehandlungsvorrichtung.

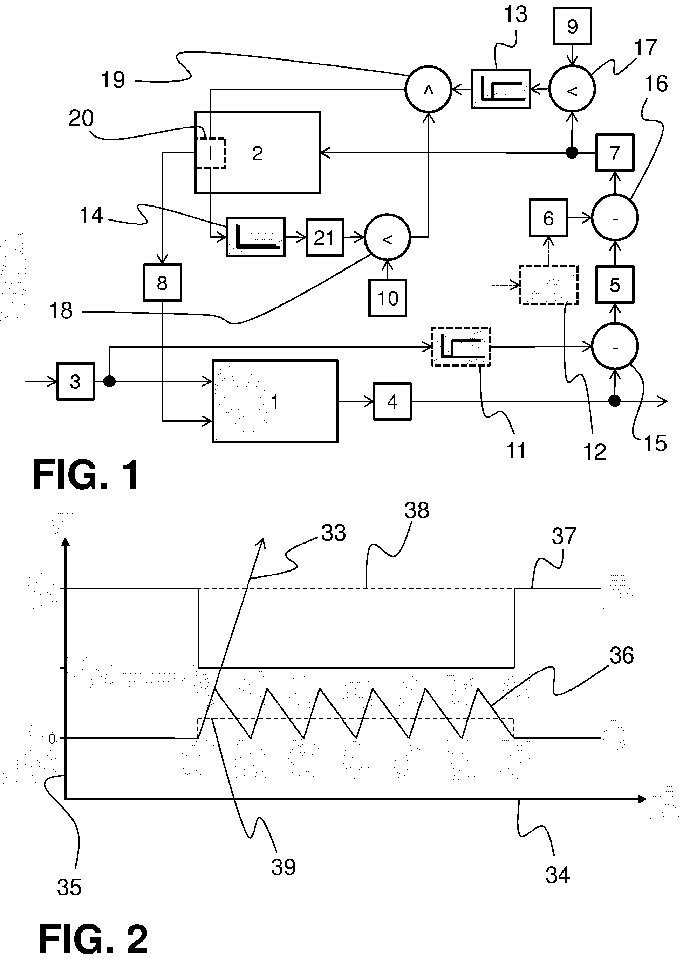

Fig. 1 zeigt ein Schaltbild eines Ausführungsbeispiels des Verfahrens zur Bestimmung von Reduktionsmittelschlupf aus einer Abgasbehandlungsvorrichtung. Das Modell 1 des SCR-Katalysators 25 (in Fig. 2 dargestellt) bestimmt eine Umsetzungsrate. Die Eingangsgrößen des Modells 1 sind das erste Sensorsignal 3 und das Dosiersignal 8. Das erste Sensorsignal 3 kann mit einer Einrichtung und/oder einem ersten Stickstoffoxidsensor gewonnen werden und gibt die ermittelte Menge an Stickstoffoxidverbindungen in dem anströmenden Abgas vor dem SCR-Katalysator 25 wieder. Das Dosiersignal 8 gibt die Menge an zugegebenem Reduktionsmittel über der Zugabestelle 26 (in Fig. 2 dargestellt) vor dem SCR-Katalysator 25 wieder. Bei einer Erfassung der Stickstoffoxidmenge mittels eines ersten Stickstoffoxidsensors 28 (in Fig. 2 dargestellt) hinter der Zugabe von Reduktionsmittel kann die Fehlmessung mit Hilfe des Dosiersignals 8 zu dem ersten Sensorsignal 3 bereinigt werden.

In dem SCR-Katalysator 25 (bzw. gleichermaßen in dem Modell 1 des SCR-Katalysators 25) werden die Stickstoffoxidverbindungen und das Ammoniak in einer Redoxreaktion umgesetzt. Das Ergebnis wird mittels des zweiten Sensorsignals 4 hinter dem SCR-Katalysator 25 erfasst, wobei das zweite Sensorsignal 4 nicht zwischen Stickstoffoxidverbindungen und Reduktionsmittel unterscheidet. Anschließend wird durch den ersten Differenzoperator 15 mit den Eingangssignalen des zweiten Sensorsignals 4 und dem ersten Sensorsignal 3 die Differenz 5 gebildet. Dabei kann ggf. das erste Sensorsignal 3 über ein erstes Totzeitglied 11 geleitet werden, so dass die Sensorsignale sich auf den gleichen Abgasabschnitt beziehen, der in dem Modell 1 des SCR-Katalysators 25 behandelt wird. Dabei kann das Totzeitglied 11 aufgrund von (vorher ermittelten) empirischen Versuchsdaten über die Raumgeschwindigkeit des Abgases in dem SCR-Katalysator 25 festgelegt sein oder aufgrund von Modellen und/oder Messungen an die jeweils vorliegende Raumgeschwindigkeit angepasst werden. Anschließend wird mit einem zweiten Differenzoperator 16 die Regelabweichung 7 aus den Eingangswerten der Differenz 5 und dem Zielwert 6 gebildet. Der Zielwert 6 ist dabei die erwünschte Zugabemenge an Reduktionsmittel, z. B. die (aktuell) stöchiometrische Zugabemenge. Dabei kann der Zielwert 6 ein fixer Wert sein oder durch ein weiteres Modell an die Umsetzung im SCR-Katalysator 25 angepasst werden, was hier durch das gestrichelte Funktionsfeld 12 und Pfeile angedeutet ist. Anschließend wird die Regelabweichung 7 dem Regelglied 2 zugeführt, welches einen integrierenden Regelanteil 20 aufweist und welches die Zugabemenge an Reduktionsmittel über das Dosiersignal 8 bestimmt. Gleichzeitig wird die Regelabweichung 7 abgegriffen und mit dem ersten Vergleichsoperator 17 mit einem ersten Schwellwert 9 verglichen.

Der integrierende Regelanteil 20 wird über das differenzierende Glied 14 in den Gradienten 21 umgerechnet. Der Gradient 21 wird mit dem zweiten Schwellwert 10 über den zweiten Vergleichsoperator 18 verglichen. Erst wenn beide Schwellwerte überschritten werden, werden sie über den Grundoperator 19 Einfluss auf den integrierenden Regelanteil 20 nehmen.

Damit die Vergleichsergebnisse derselben Regelsequenz miteinander verglichen werden, ist zwischen dem Grundoperator 19 und dem Vergleichsoperator 17 noch ein zweites Totzeitglied 13 zwischengeschaltet.

In Fig. 2 ist ein Diagramm der Regelung gezeigt, in welchem die Reaktion des Reglers 27 in Form des Reduktionsmittelschlupfs 36 auf eine gestörte bzw. unerwünschte Umsetzungsrate 37 gezeigt ist. Die Abszisse 34 stellt dabei die Zeitachse dar. Die Ordinate 35 definiert die hier nicht maßstäblich gezeigten Werte des Reduktionsmittelschlupfs 36 und der Umsetzungsrate 37. Solange die Umsetzungsrate mit der Sollumsetzungsrate 38 deckungsgleich ist, beträgt der Schlupf Null, wie es an der Ordinate 35 abzulesen ist. Beim Auftreten einer Störung sinkt die Umsetzungsrate 37 ab und die PI-Regler-Kurve 33 würde ansteigen, weil sie nicht erkennt, dass die Umsetzungsrate 37 abgesunken ist. Stattdessen wird sie annehmen, dass eine erhöhte Umsetzung möglich ist, und mehr Reduktionsmittel zugeben wollen. Der Regler 27, der das hier vorgeschlagene Verfahren ausführt, reagiert aber auf die sinkende Umsetzungsrate 37 und stellt einen Schlupf 36 ein, der im Mittel 39 nur wenig von Null abweicht.

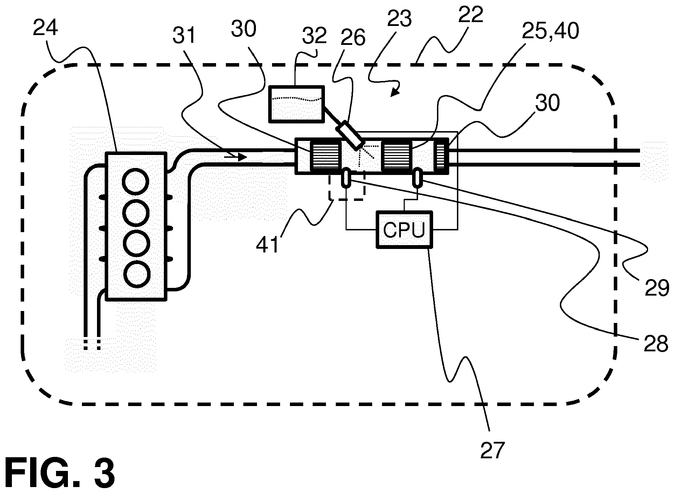

In Fig. 3 ist ein Kraftfahrzeug 22 gezeigt, welches eine Abgasbehandlungsvorrichtung 23 und eine Verbrennungskraftmaschine 24 aufweist. In der Abgasbehandlungsvorrichtung 23 ist ein SCR-Katalysator 25 und eine Zugabestelle 26 für Reduktionsmittel vorgesehen, die hier beispielhaft als Einspritzdüse dargestellt ist. Ein Regler 27 gibt in diesem Beispiel auf Basis der Eingangswerte von einem ersten Stickstoffoxidsensor 28 und einem zweiten Stickstoffoxidsensor 29 ein Dosiersignal 8 (siehe Fig. 1) an die Zugabestelle 26. Daraufhin gibt die Zugabestelle 26 Reduktionsmittel aus einem Reduktionsmittelank 32 in die Abgasbehandlungsvorrichtung 23 in Abgasströmungsrichtung 31 vor dem SCR-Katalysator 25 ein. In dem dargestellten Beispiel ist der SCR-Katalysator 25 in Form eines Speicherkatalysators 40 (einteilig bzw. integriert) vorgesehen. Der Speicherkatalysator kann aber auch als (separates) Bauteil vorgesehen sein und unmittelbar vor der Eintrittsseite des SCR-Katalysators 25 (als Teilbereich des Wabenkörpers und/oder als separater Speicherkörper (Vlies, Wabenkörper, etc.) zwischen Zugabestelle 26 und SCR-Katalysator 25 angeordnet sein. In diesem Beispiel ist ebenfalls ein Oxidationskatalysator 30 vor der Zugabestelle 26 und dem ersten Stickstoffoxidsensor 28, der hier Bestandteil einer Einrichtung 41 zur Ermittlung der Stickstoffdioxidverbindungsmenge ist, vorgesehen. Ein weiterer Oxidationskatalysator 30 ist nachfolgend dem zweiten Stickstoffoxidsensor 29 vorgesehen.

Mit dem hier vorgeschlagenen Verfahren ist es möglich, einen Reduktionsmittelschlupf auch bei der Verwendung eines Stickstoffoxidsensors mit Querempfindlichkeit auf Reduktionsmittel sicher festzustellen, wobei ein sehr schnelles Regelglied eingesetzt werden kann.

### Bezugszeichenliste

- 1: Modell des SCR-Katalysators
- 2: Regelglied
- 3: erstes Sensorsignal
- 4: zweites Sensorsignal
- 5: Differenz
- 6: Zielwert
- 7: Regelabweichung
- 8: Dosiersignal
- 9: erster Schwellwert
- 10: zweiter Schwellwert
- 11: erstes Totzeitglied
- 12: Funktionsfeld
- 13: zweites Totzeitglied
- 14: differenzierendes Glied
- 15: erster Differenzoperator
- 16: zweiter Differenzoperator
- 17: erster Vergleichsoperator
- 18: zweiter Vergleichsoperator
- 19: Grundoperator
- 20: integrierender Regelanteil
- 21: Gradient
- 22: Kraftfahrzeug
- 23: Abgasbehandlungsvorrichtung
- 24: Verbrennungskraftmaschine
- 25: SCR-Katalysator
- 26: Zugabestelle
- 27: Regler
- 28: erster Stickstoffoxidsensor
- 29: zweiter Stickstoffoxidsensor
- 30: Oxidationskatalysator
- 31: Abgasströmungsrichtung
- 32: Reduktionsmitteltank
- 33: PI-Regler-Kurve
- 34: Abszisse
- 35: Ordinate
- 36: Schlupf
- 37: Umsetzungsrate
- 38: Sollumsetzungsrate
- 39: Mittel
- 40: Speicherkatalysator
- 41: Einrichtung

## Patentansprüche

1. Verfahren zur Bestimmung von Reduktionsmittelschlupf aus einer Abgasbehandlungsvorrichtung (23) aufweisend:
- einen SCR-Katalysator (25);
- eine in Abgasströmungsrichtung (31) vor dem SCR-Katalysator (25) angeordnete Zugabestelle (26) für Reduktionsmittel;
- eine Einrichtung (41) zur Ermittlung einer Stickstoffoxidverbindungsmenge in Abgasströmungsrichtung (31) vor dem SCR-Katalysator (25); und
- einen zweiten Stickstoffoxidsensor (29) in Abgasströmungsrichtung (31) hinter dem SCR-Katalysator (25),
wobei für die Einrichtung (41) und den zweiten Stickstoffoxidsensor (29) Reduktionsmittel und Stickstoffoxidverbindungen nicht unterscheidbar sind und wobei eine Zugabemenge von Reduktionsmittel zu der Abgasbehandlungsvorrichtung (23) mit einem Regelglied (2) geregelt wird, das einen integrierenden Regelanteil (20) hat und das Verfahren zumindest die folgenden Schritte aufweist:
a) Bestimmen einer Differenz (5) der Sensorsignale (3, 4) des zweiten Stickstoffoxidsensors (29) und der Einrichtung (41);
b) Bestimmen einer Regelabweichung (7) aus der Differenz (5) und einem Zielwert (6) des Regelglieds (2);
d) Bestimmen eines Gradienten (21) des integrierenden Regelanteils (20);
e) Feststellen von Reduktionsmittelschlupf, wenn die Regelabweichung (7) einen ersten Schwellwert (9) und der Gradient (21) einen zweiten Schwellwert (10) überschreiten.

2. Verfahren nach Patentanspruch 1, wobei in Abgasströmungsrichtung (31) vor dem zweiten Stickstoffoxidsensor (29) und hinter der Zugabestelle (26) ein Speicherkatalysator zur Speicherung von Reduktionsmittel angeordnet ist.

3. Verfahren nach einem der vorhergehenden Patentansprüche, wobei das Verfahren aktiviert wird, wenn die an die Abgasbehandlungsvorrichtung (23) angeschlossene Verbrennungskraftmaschine (24) in einem konstanten Betriebszustand ist.

4. Verfahren nach einem der vorhergehenden Patentansprüche, wobei der integrierende Regelanteil (20) für ein erstes Zeitintervall auf einen Maximalwert begrenzt wird, wenn in Schritt e) ein Reduktionsmittelschlupf festgestellt wurde.

5. Kraftfahrzeug (22) aufweisend eine Verbrennungskraftmaschine (24) und eine Abgasbehandlungsvorrichtung (23) zur Reinigung der Abgase der Verbrennungskraftmaschine (24) aufweisend:
- einen SCR-Katalysator (25);
- eine in Abgasströmungsrichtung (31) vor dem SCR-Katalysator (25) angeordnete Zugabestelle (26) für Reduktionsmittel;
- eine Einrichtung (41) zur Ermittlung einer Stickstoffoxidverbindungenmenge in Abgasströmungsrichtung (31) vor dem SCR-Katalysator (25); und
- einen zweiten Stickstoffoxidsensor (29) in Abgasströmungsrichtung (31) hinter dem SCR-Katalysator (25),
sowie einen Regler (27), welcher zur Durchführung eines Verfahrens gemäß einem der vorhergehenden Patentansprüche eingerichtet ist.

## Claims

1. Method for determining reducing agent slippage from an exhaust-gas treatment device (23) having:
- an SCR catalytic converter (25);
- a metering-in point (26) for reducing agent, arranged upstream of the SCR catalytic converter (25) in the exhaust-gas flow direction (31);
- a device (41) for determining a nitrogen oxide compound flow rate upstream of the SCR catalytic converter (25) in the exhaust-gas flow direction (31); and
- a second nitrogen oxide sensor (29) downstream of the SCR catalytic converter (25) in the exhaust-gas flow direction (31),
wherein, for the device (41) and the second nitrogen oxide sensor (29), reducing agent and nitrogen oxide compounds are not distinguishable, and wherein a quantity of reducing agent metered into the exhaust-gas treatment device (23) is regulated by means of a regulating element (2) which has an integral regulating component (20), and the method has at least the following steps:
a) determining a difference (5) between the sensor signals (3, 4) of the second nitrogen oxide sensor (29) and of the device (41);
b) determining a regulating deviation (7) from the difference (5) and a target value (6) of the regulating element (2);
d) determining a gradient (21) of the integral regulating component (20);
e) identifying reducing agent slippage if the regulating deviation (7) exceeds a first threshold value (9) and the gradient (21) exceeds a second threshold value (10).

2. Method according to Patent Claim 1, wherein a storage catalytic converter for storing reducing agent is arranged upstream of the second nitrogen oxide sensor (29) and downstream of the metering-in point (26) in the exhaust-gas flow direction (31).

3. Method according to either of the preceding patent claims, wherein the method is activated when the internal combustion engine (24) connected to the exhaust-gas treatment device (23) is in a constant operating state.

4. Method according to one of the preceding patent claims, wherein the integral regulating component (20) is, for a first time interval, limited to a maximum value if reducing agent slippage has been identified in step e).

5. Motor vehicle (22) having an internal combustion engine (24) and having an exhaust-gas treatment device (23) for the purification of the exhaust gases of the internal combustion engine (24) having:
- an SCR catalytic converter (25);
- a metering-in point (26) for reducing agent, arranged upstream of the SCR catalytic converter (25) in the exhaust-gas flow direction (31);
- a device (41) for determining a nitrogen oxide compound flow rate upstream of the SCR catalytic converter (25) in the exhaust-gas flow direction (31); and
- a second nitrogen oxide sensor (29) downstream of the SCR catalytic converter (25) in the exhaust-gas flow direction (31),
and a regulator (27) which is set up for carrying out a method according to one of the preceding patent claims.

## Revendications

1. Procédé pour déterminer les rejets d'un agent de réduction hors d'un dispositif de traitement de gaz d'échappement (23) présentant:
- un catalyseur SCR (25);
- un point d'apport (26) pour l'agent de réduction disposé en amont du catalyseur SCR (25) dans la direction d'écoulement des gaz d'échappement (31);
- un dispositif (41) pour déterminer une quantité de composés d'oxyde d'azote en amont du catalyseur SCR (25) dans la direction d'écoulement des gaz d'échappement (31); et
- un deuxième détecteur d'oxydes d'azote (29) en aval du catalyseur SCR (25) dans la direction d'écoulement des gaz d'échappement (31),
dans lequel pour le dispositif (41) et le deuxième détecteur d'oxydes d'azote (29) l'agent de réduction et les composés d'oxydes d'azote ne sont pas discernables et dans lequel une quantité d'apport d'agent de réduction au dispositif de traitement de gaz d'échappement (23) est régulée avec un organe de réglage (2), qui comporte une partie de réglage par intégration (20) et le procédé présente au moins les étapes suivantes:
a) déterminer une différence (5) des signaux de détecteur (3, 4) du deuxième détecteur d'oxydes d'azote (29) et du dispositif (41);
b) déterminer un écart de réglage (7) à partir de la différence (5) et d'une valeur cible (6) de l'organe de réglage (2);
d) déterminer un gradient (21) de la partie de réglage par intégration (20);
e) constater un rejet d'agent de réduction, lorsque l'écart de réglage (7) dépasse une première valeur de seuil (9) et que le gradient (21) dépasse une deuxième valeur de seuil (10).

2. Procédé selon la revendication 1, dans lequel un catalyseur d'accumulation est disposé en amont du deuxième détecteur d'oxydes d'azote (29) et en aval du point d'apport (26) dans la direction d'écoulement des gaz d'échappement (31) pour l'accumulation d'agent de réduction.

3. Procédé selon l'une quelconque des revendications précédentes, dans lequel on active le procédé lorsque le moteur à combustion interne (24) raccordé au dispositif de traitement de gaz d'échappement (23) se trouve dans un état de fonctionnement constant.

4. Procédé selon l'une quelconque des revendications précédentes, dans lequel la partie de régulation par intégration (20) est limitée pour un premier intervalle de temps à une valeur maximale, lorsque l'on a constaté à l'étape e) un rejet d'agent de réduction.

5. Véhicule automobile (22) présentant un moteur à combustion interne (24) et un dispositif de traitement de gaz d'échappement (23) pour l'épuration des gaz d'échappement du moteur à combustion interne (24) présentant:
- un catalyseur SCR (25);
- un point d'apport (26) pour l'agent de réduction disposé en amont du catalyseur SCR (25) dans la direction d'écoulement des gaz d'échappement (31);
- un dispositif (41) pour déterminer une quantité de composés d'oxyde d'azote en amont du catalyseur SCR (25) dans la direction d'écoulement des gaz d'échappement (31); et
- un deuxième détecteur d'oxydes d'azote (29) en aval du catalyseur SCR (25) dans la direction d'écoulement des gaz d'échappement (31),
ainsi qu'un régulateur (27), qui est conçu pour la mise en oeuvre d'un procédé selon l'une quelconque des revendications précédentes.
